# EUROPEAN PATENT APPLICATION

(11) **EP 1 992 558 A1**
(43) Date of publication of application: **19.11.2008**
(21) Application number: 07425281.8
(22) Date of filing: 15.05.2007
(51) Int. Cl.: B63B 1/06, B63B 1/32

(54) **Tiltable bow bulb and corresponding hull**

(71) Applicant: Mondo Marine Eng. Srl, 17100 Savona (IT)
(72) Inventor: Falletta, Calogero, 16100 Genova (IT); Ausonio, Pierluigi, 18038 Sanremo (Imperia) (IT)
(74) Representative: Bosotti, Luciano

(57) **Abstract**

A bow bulb for watercraft, such as for example watercraft with semi-resisting hull:
- is provided with at least one foil (14) with horizontal development that is able to interact with the navigation fluid; and
- is selectively tiltable about an axis (X12) transverse to the direction of navigation so as to vary selectively the angle of incidence with respect to said navigation fluid.

## Description

### Field of the inventino

The invention relates to bow bulbs for watercraft.

### Description of the corresponding art

The so-called "bow bulb" is a hull appendage having the function of reducing the resistance of the wave that is formed at the bow of a watercraft due to the increase in pressure resulting from the penetration of the hull between two walls of water (navigation fluid).

This particular form of appendage started to be experimented in liners starting from about the early 1950s. There have been progressively increasing in-depth studies until we have arrived today at bulb shapes that are particularly pronounced towards the bow.

The shape of the bulb is studied for a certain rate of advance and for a given draught (displacement); a given shape of bulb can reduce the resistance at a given speed of navigation, but cannot have the same effects for a different rate of advance.

The above fact plays a significant role in the case of watercraft that have more than one speed of operation, such as for example, yachts, patrol boats and military ships in general, as well as fishing boats.

The application of the bulb to the hull has spread in the presence of characteristics of a quite low relative speed (Froude number), i.e., less than 0.3.

For semi-resisting hulls (Froude number: 0.4-0.7), the use of the bulb is not frequent. Optimisation of the shape for the maximum speed of navigation (for example, 21 knots on a hull length of 40 m) does not usually yield fewer benefits at 12 knots, and vice versa. More often than not, a compromise is sought in the shape of the bulb so as to prevent a big advantage at one end of the range of speeds envisaged from entailing an important penalization at the opposite end of said range of speeds.

The bulb normally has a fixed structure, which is integral with the hull. On the other hand, bow bulbs are known in the art (see, for example, the documents Nos. JP10059267, GB 980 437) which are able to vary their height with respect to the hull according to the conditions of navigation. The document GB-A-1 316 287 illustrates a bow bulb that is adjustable in position along the longitudinal axis of the hull. Again, the document GB-A-1 404 521 describes an adjustable bulb, in which the vertical translation of a portion of the bulb is envisaged, or else the presence of a number of mobile portions that co-operate for a rototranslation of the top front of the bulb.

For completeness of discussion, it may moreover be noted that it is known to apply mobile appendages in the bow part of fast watercraft, where, for example, foils are applied to increase the hydrodynamic lift with a hydrofoil effect.

### Purpose and summary of the present invention

From the foregoing, there emerges the need to extend the advantages that can be achieved with the use of a bow bulb, in particular also in the case of semi-resisting hulls (Froude number 0.4-0.7), with the capacity of achieving an adaptive effect according to the conditions of navigation, in particular the navigation speed.

The object of the present invention is to provide an answer to said need.

According to the present invention, that object is achieved thanks to a bow bulb for hulls having the characteristics called for specifically in the ensuing claims. The invention also refers to a hull equipped with said bulb.

The claims form an integral part of the disclosure of the invention provided herein.

The solution described herein envisages then the use of a tilting bulb, which can adapt the angle of attack (or incidence) with respect to navigation fluid according to the rate of advance. Preferentially, the geometrical shape of the bulb has an enlarged part with roundish bow, which terminates towards the stern with a tapered drop-like shape. In a preferred way, it is in this area that one or more horizontal fins are inserted, with the function of increasing the effect of deviation of the flow precisely of the bulb.

### Brief description of the annexed drawings

The invention will now be described, purely by way of non-limiting example, with reference to the annexed drawings, wherein:
- Figure 1 is an overall view of the bow part of a hull, provided with a bow bulb of the type described herein;
- Figure 2 corresponds basically to a partially sectioned top plan view, according to a viewpoint identified by the line II-II of Figure 1; and

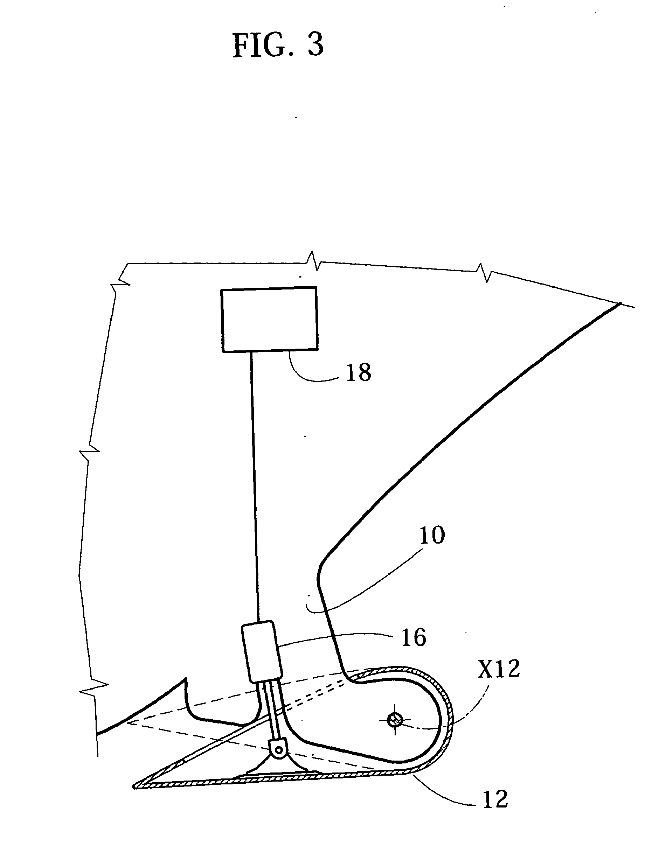

- Figure 3 illustrates further details of the bow bulb described herein.

### Detailed description of example of embodiment

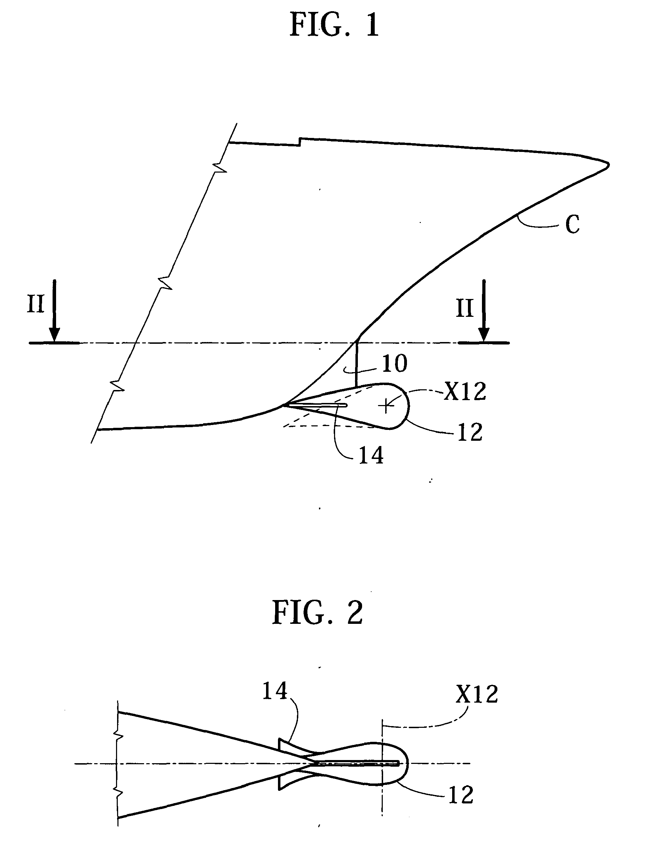

In Figure 1, the reference C indicates the bow part of a hull of a watercraft (not illustrated as a whole). It is, in the preferred conditions of use of the solution described herein, a hull that can be identified as a hull body having a Froude number comprised between 0.4 and 0.7, i.e., a so-called fast semi-resisting hull, which can be used, for example, for high-level pleasure boats.

The reference number 10 indicates a bracket element or "foot" (or, to use the terminology prevalent in the aeronautics sector, a "pod") substantially constituted by a bracket oriented in a vertical direction that projects forwards starting from the bow part C so as to be able to support a bow bulb 12.

The bow bulb 12 is constituted basically by a body having a general streamlining configuration (i.e., a favourable fluid-dynamic characteristic), such as a drop-like shape (or shaped like an airship or bomb), usually with a roundish front part and a progressively tapered rear part, the terms "front" and "rear" referring to the normal direction of navigation of the hull C, which is from left to right as viewed in the figures.

The body of the bulb 12 is hinged on the pod 10, usually in an approximately centroidal position, so as to be able to perform a movement of orientation about a horizontal axis X12, directed transversely with respect to the direction of advance of the hull S.

It is, then, in other words, a movement that enables selective variation of the angle of incidence of the bulb 12 with respect to the navigation-fluid means, i.e., the fluid in which and on which (it is recalled that we are talking about semi-resisting hulls) the hull S advances.

From the constructional standpoint, the bulb is usually made of the same material as the hull (aluminium alloy or steel). To enable orientation with respect to the axis X12, which is transverse with respect to the direction of navigation, the bulb 12 usually has a hinge in the roundish drop-shaped area constituted by a through pin, anchored to a bearing in the boxlike area of the supporting foot 10, which is connected to the hull C.

Preferentially, in a position corresponding to its rear end, the bow bulb 12 is provided with two fins or foils 14 that project horizontally on opposite sides of the body of the bulb 12 itself.

It is on the other hand evident that the foils in question could be present in different numbers (just one or more than two) and with different positions of assembly, this being obtained without prejudice to their function of surfaces of "hydrodynamic interaction" with the means of navigation.

The reference number 16 indicates an actuator (in the examplary of embodiment illustrated herein, a fluid-dynamic actuator such as a hydraulic jack), which enables, according to a control signal coming from a control unit 18 mounted on board the watercraft, selective adjustment of the attitude or incidence of the bulb 12, varying its position with respect to the axis X12.

The actuator 16 is usually located so as to act in the rear area and is typically at least in part inserted in a cavity created in the boxlike structure of the bulb 12.

The movement imposed by the actuator 16 enables tilting of the bulb 12 about the axis X12, and once the desired angle of incidence is reached, the bulb 12 is kept firmly in the position reached by the interception of the oleodynamic valves of the supply circuit (not specifically illustrated, but of a known type) of the actuator 16.

The foil or foils 14 of the bulb 12 increase the hydrodynamic effect of deviation of the flow. In this way, the foil or foils 14 amplify the efficacy of the bulb 12, which can be oriented in the optimal position according to the range of speeds in which the hull is located.

The adjustment of the position of the bulb 12, and hence of its angle of incidence, can correspond to a law of adjustment determined, for example, experimentally, according to the hydrodynamic characteristics of the hull C and stored within the unit 18 in such a way as to cause a given value of the angle of incidence of the bow bulb 16 to correspond, for example, to each value of speed of navigation.

Even though this solution is not at the moment considered preferential, it is also possible to hypothesise the use of the bow bulb 12 illustrated herein according to an anti-pitching stabilization, i.e., with the possibility of varying continuously the angle of incidence of the bow bulb 12, tilting it about the axis X12 so as to counter the overall movement of roll of the watercraft.

Of course, without prejudice to the principle of the invention, the details of construction and the embodiments may vary widely with respect to what is described and illustrated herein purely by way of non-limiting example, without thereby departing from the scope of the present invention, as defined by the annexed claims.

## Claims

1. A bow bulb for watercraft, **characterized in that** said bow bulb (12):
- is provided with at least one foil (14) with horizontal extension for interaction with navigation fluid; and
- is selectively tiltable about an axis (X12) transverse to the direction of navigation so as to vary selectively the angle of incidence with respect to said navigation fluid.

2. The bulb according to Claim 1, having a general drop-shape.

3. The bulb according to Claim 1 or Claim 2, having a roundish front part and a tapered rear part.

4. The bulb according to Claim 3, in which said at least one foil (14) is located in a position corresponding to said tapered rear portion.

5. The bulb according to any one of the preceding claims, comprising a pair of foils (14) extending on opposite sides of the bulb (12) itself.

6. The bulb according to any one of the preceding claims, with associated thereto an actuator element (16) activable for tilting the bulb (12) about said axis (X12) transverse to the direction of navigation.

7. The bulb according to Claim 6, in which said actuator element (16) is coupled to a control unit (18) configured for tilting the bulb (12) about said axis (X12) transverse to the direction of navigation according to a given law.

8. A hull for watercraft provided with a bow bulb (12) according to any one of the preceding claims.

9. The hull according to Claim 8, in the form of semi-resisting hull.

10. The hull according to Claim 8, having a Froude number between 0.4 and 0.7.
